# EUROPÄISCHE PATENTSCHRIFT

(11) **EP 2 849 388 B1**
(45) Veröffentlichungstag und Bekanntmachung des Hinweises auf die Patenterteilung: **26.04.2017**
(21) Anmeldenummer: 13183915.1
(22) Anmeldetag: 11.09.2013
(51) Int. Cl.: B61L 3/18, H04B 3/54, H04L 12/40, H04L 12/42

(54) **Schleifleitungsnetzwerk für die Kommunikation von ortfesten Anlagen mit zumindest einem ortsveränderlichen Anlagenteil**
Contact rail network for the communication of stationary systems with at least one system component having a variable position
Réseau de gaines pour la communication entre des installations fixes et au moins une pièce d'installation située à un emplacement non fixe

(43) Veröffentlichungstag der Anmeldung: 18.03.2015
(73) Patentinhaber: Siemens Aktiengesellschaft, 80333 München (DE)
(72) Erfinder: Coulon, David, 71069 Sindelfingen (DE); Krenz, Albert, 71139 Ehningen (DE); Linzmaier, Klaus-Peter, 73650 Winterbach (DE); Wilding, Michael, 71254 Ditzingen (DE)

(56) Entgegenhaltungen:
- US-A1- 2013 138 996
- SIEMENS AG: "PRB Segment Controller User's Guide", , 8. März 2006 (2006-03-08), Seiten 1-31, XP055100914, Gefunden im Internet: URL:http://cache.automation.siemens.com/dn l/DU/DU5MDQxAAAA_60521906_HB/PRBSC_12_2005 _d.pdf [gefunden am 2014-02-07]
- SIEMENS AG: "Power Rail Booster User's Guide version 12/2005", , 31. Dezember 2005 (2005-12-31), Seiten 1-49, XP055088492, Gefunden im Internet: URL:http://cache.automation.siemens.com/dn l/TQ/TQ3NjE1AAAA_60522069_HB/PRB_12_2005_e .pdf [gefunden am 2013-11-15]

## Beschreibung

Die Erfindung betrifft ein Schleifleitungsnetzwerk für die Kommunikation von ortsfesten Anlagenteilen mit ortsveränderlichen Anlagenteilen, aufweisend
- eine Mehrzahl an Schleifleitungssegmenten, wobei jedes Segment einen ersten Leiter und einen zweiten Leiter aufweist, auf welchen Kommunikationsdaten und eine Versorgungsspannung für die ortsveränderlichen Anlagenteile übertragbar sind,
- eine Mehrzahl an Spannungsquellen, welche jeweils an den ersten und den zweiten Leiter zur Bereitstellung der Versorgungsspannung angeschaltet sind,
- eine Mehrzahl an Datenübertragungseinrichtungen, welche ebenfalls an den ersten und den zweiten Leiter zur Datenübertragung zwischen den ortsfesten Anlagenteilen und den ortsveränderlichen Anlagenteilen angeschaltet sind,
- eine Mehrzahl an Koppelelementen, wobei ein Koppelelement ein erstes Schleifleitungssegment an einer Übergangsstelle mit einem zweiten Schleifleitungssegment verkoppelt, wobei die Koppelelemente derart ausgestaltet sind, dass zwischen den Schleifleitungssegmenten zwar Daten übertragen werden können, aber die angeschaltete Versorgungsspannung geblockt wird.

Auch betrifft die Erfindung ein Verfahren zur Durchführung einer Kommunikation zwischen ortsfesten Anlagenteilen und ortsveränderlichen Anlagenteilen in dem bereits genannten Schleifleitungsnetzwerk.

Im Sinne der Erfindung soll unter ortsveränderlichen Anlagenteilen Transportwagen verstanden werden, welche sich in einem Transportsystem bewegen, wobei fest installierte Steuerungssysteme zur übergeordneten Steuerung des Transportsystems, die ortsfesten Anlagenteile darstellen. Bei derartigen Transportsystemen ist eine Transportbahn, beispielsweise ein Schienensystem, in Abschnitte unterteilt, vorzugsweise in Segmente, wobei sich auf diesen Segmenten Fahrzeuge oder Transportwagen in einer nahezu beliebigen Anzahl bewegen können. Damit das Verhalten und somit ein Fahrprofil eines Transportwagens innerhalb des Transportsystems, beispielsweise einer Produktionsanlage für den Automobilbau, den unterschiedlichen Fertigungsprozessen angepasst werden kann, ist eine Kommunikation zwischen einer zentralen Anlagensteuerung und den Transportwagen notwendig.

In dem Handbuch "PRB Segment Controller Anwenderbeschreibung, Ausgabe 12/2005, 6ES7972-4AA50-0XA0" der Siemens AG wird bereits ein Schleifleitungsnetzwerk und ein Verfahren für die Kommunikation von ortsfesten Anlagenteilen mit ortsveränderlichen Anlagenteilen beschrieben. Als Kommunikationsverfahren wird hier allerdings eine PROFIBUS-Kommunikation verwendet. Bei der PROFIBUS-Kommunikation handelt es sich um ein Übertragungssystem, welches ein Zugriffsverfahren nach dem Token-Ring/Master-Slave benutzt. Zu jedem Zeitpunkt darf nur ein Teilnehmer auf das Übertragungsmedium zugreifen. Bei der PROFIBUS-Kommunikation werden Übertragungsgeschwindigkeiten von 9,6 kBit/s bis zu 500 kBit/s erreicht. Damit stellt sich ein Feldbussystem mit einer PROFIBUS-Kommunikation als ein relativ schmalbandiges Kommunikationsverfahren dar.

Es ist daher die Aufgabe der Erfindung, ein Schleifleitungsnetzwerk für die Kommunikation von ortsfesten Anlagenteilen mit ortsveränderlichen Anlagenteilen bzw. ein Verfahren zur Durchführung der Kommunikation bereitzustellen, bei welchem höhere Übertragungsraten erzielt werden können.

Die Aufgabe wird für das eingangs genannte Schleifleitungsnetzwerk dadurch gelöst, dass jeder Datenübertragungseinrichtung ein Empfangsbereich zugeordnet ist, wobei der Empfangsbereich auf eine Strecke abgebildet ist, welche sich aus einer Länge eines Schleifleitungssegmentes zuzüglich einer ersten Überlappungslänge und einer zweiten einer zweiten Überlappungslänge ergibt, dabei ist die an das jeweilige Schleifleitungssegment angeschlossene Datenübertragungseinrichtung derart ausgestaltet, dass ein von ihr ausgesendeter Pegel eines Datensignals auf den jeweiligen Empfangsbereich derart abgestimmt ist, dass aufgrund einer Abschwächung des Pegels, hervorgerufen durch eine Leitungsdämpfung entlang der Leiter und der Koppelelemente, der Pegel in einer Empfangseinrichtung der ortsveränderlichen Anlagenteile, welcher sich außerhalb des Empfangsbereiches befindet nicht mehr als gültiges Signal auswertbar ist. Ein derartig ausgestaltetes Schleifleiternetzwerk lässt ein neueres Kommunikationsverfahren zu, nämlich ein PROFINET-Kommunikationsverfahren, basierend auf der Ethernet-Technologie. Mit großem Vorteil können nun bei einer erhöhten Datenübertragungsrate zusätzlich noch längere Segmente genutzt werden. Hierzu wird bei einer größeren Ausdehnung von Schleifleitungssegmenten bzw. bei einer größeren Ausdehnung des ganzen Schleifleitungsnetzwerks und zusätzlich einer größeren Teilnehmeranzahl, wobei ein Teilnehmer als ein ortsveränderlicher Anlagenteil angesehen wird, eine Einspeisung von Datensignalen an mehreren Punkten in der Anlage erfolgen. Also beispielsweise eine Einspeisung von Datensignalen über eine Datenübertragungseinrichtung, welche fest einem Schleifleitungssegment zugeordnet ist. Hierdurch ergibt sich für jede Einspeisestelle eines Datensignals über eine Datenübertragungseinrichtung ein Empfangsbereich, innerhalb dessen die Kommunikation mit den ortsveränderlichen Anlagenteilen möglich ist.

Eine bevorzugte Ausführung sieht vor, zwischen dem ersten Schleifleitungssegment und dem zweiten Schleifleitungssegment einen ersten Überlappungsbereich auszubilden, in welchem ein von einer ersten Datenübertragungseinrichtung ausgesendeter erster Pegel und ein von einer zweiten Datenübertragungseinrichtung ausgesendeter zweiter Pegel in der Empfangseinrichtung des ortsveränderlichen Anlagenteils als jeweils ein gültiges Signal auswertbar ist. Dies bietet den Vorteil, dass bei einem Übergang eines ortsveränderlichen Anlagenteils von einem Segment zu einem anderen Segment es nicht zu Kommunikationsausfällen kommen kann.

Vorzugsweise ist jeder Datenübertragungseinrichtung ein Kommunikationskanal zugeordnet, wobei in einer ersten alternativen Ausgestaltung jeder Datenübertragungseinrichtung eine eindeutige Segmentnummer zur logischen Trennung der Datenübertragung zugeordnet ist und in einer zweiten Alternative ist jeder Datenübertragungseinrichtung ein eindeutiges Frequenzband zur Datenübertragung zugeordnet.

Bei der Ausgestaltung mit dem eindeutigen Frequenzband wird vorzugsweise ein Frequenzmultiplexing genutzt, wobei jede Datenübertragungseinrichtung ihre Daten in einem ihr fest zugeordneten Frequenzband auf den Leiter überträgt.

Bei der Variante mit der eindeutigen Segmentnummer zur logischen Trennung der Schleifleitungssegmente, wird beispielsweise jeder Datenübertragungseinrichtung ein eindeutiger Network-Management-Key zugeordnet. Mit einem Network-Management-Key lässt sich eine Unterteilung des Schleifleitungsnetzwerkes in unabhängige logische Netze, nämlich den Schleifleitungssegmenten, erreichen.

In einer besonders robusten Ausführung des Schleifleitungsnetzwerkes ist zumindest ein ortsveränderlicher Anlagenteil über Schleifkontakte an den ersten und zweiten Leiter angeschlossen und die Empfangseinrichtung ist derart ausgestaltet, dass ein erstes Modem und ein zweites Modem vorhanden ist, welche ausgestaltet sind, eine erste Kommunikationsverbindung zu einer Datenübertragungseinrichtung aufrechtzuerhalten und eine zweite Kommunikationsverbindung zu einer anderen Datenübertragungseinrichtung aufzubauen und nach der aufgebauten, stehenden zweiten Kommunikationsverbindung die erste Kommunikationsverbindung abzubauen. Um bei einem Durchfahren des ortsveränderlichen Anlagenteils von Schleifleitungssegment zu Schleifleitungssegment keine Kommunikationsunterbrechung zu bekommen, ist die Empfangseinrichtung mit ihren zwei Modems derart konfiguriert, dass eine Kommunikationsverbindung über einen ersten Kommunikationskanal zwischen einem ersten Modem und einer ersten Datenübertragungseinrichtung aufrechterhalten wird, während eine zweite Kommunikationsverbindung währenddessen über ein zweites Modem mit einer zweiten Datenübertragungseinrichtung eines anderen Schleifleitungssegmentes aufgebaut wird. Nachdem die zweite Verbindung steht, kann hiernach die erste Verbindung abgebaut werden.

Vorteilhafterweise ist das Schleifleitungsnetzwerk ausgestaltet, mit Datenübertragungseinrichtungen und zumindest einer Empfangseinrichtung, welche nach der Ethernet-Technologie arbeiten.

Mit dem zuvor genannten Schleifleitungsnetzwerk werden nunmehr folgende Vorteile erreicht:
1) Auf den Einsatz einer funkbasierten Lösung kann verzichtet werden, da bei funkbasierten Lösungen ein Übersprechen zwischen mehreren solcher Anlagen erfolgen kann.
2) Auf bekannte Kommunikationsverfahren über Schlitzhohlleiter kann verzichtet werden, insbesondere können unterschiedliche Leitungsarten entlang der Schiene (z.B. Schleifleiter für die Leistung, und Hohlleiter für die Daten) vermieden werden.
3) Eine Ausdehnung des Schleifleiternetzwerkes von mehreren 100 m bis zu wenigen Kilometern Länge ist nun möglich.
4) Mit dem neuartigen Kommunikationsverfahren kann in dem Schleifleiternetzwerk eine größere Teilnehmerzahl, vorzugsweise 150 bis 250 Teilnehmer, erreicht werden.

Auch wird die eingangs genannte Aufgabe durch ein Verfahren zur Durchführung einer Kommunikation zwischen ortsfesten Anlagenteilen und ortsveränderlichen Anlagenteilen gelöst, wobei eine Mehrzahl von Schleifleitungssegmenten hintereinander angeordnet werden, wobei in jedem Schleifleitungssegment über einen ersten Leiter und einen zweiten Leiter Kommunikationsdaten und eine Versorgungsspannung für die ortsveränderlichen Anlagenteile übertragen werden, wobei Spannungsquelle genutzt werden um in den jeweiligen ersten und den zweiten Leiter die Versorgungsspannung einzuspeisen, wobei Datenübertragungseinrichtungen genutzt werden, welche ebenfalls an den ersten und den zweiten Leiter zur Datenübertragung zwischen dem ortsfesten Anlagenteil und dem ortsveränderlichen Anlagenteil angeschaltet werden, wobei die Schleifleitungssegmente über Koppelelemente miteinander verkoppelt werden, wobei die Koppelelemente zwar Daten übertragen, aber die angeschaltete Versorgungsspannung blocken, dabei wird jeder Datenübertragungseinrichtung ein Empfangsbereich zugeordnet, wobei der Empfangsbereich auf eine Strecke abgebildet wird, welche sich aus einer Länge eines Schleifleitungssegmentes zuzüglich einer ersten Überlappungslänge und einer zweiten Überlappungslänge ergibt, dabei wird die an das jeweilige Schleifleitungssegment angeschlossene Datenübertragungseinrichtung derart betrieben, dass ein von ihr ausgesendeter Pegel eines Datensignals auf den jeweiligen Empfangsbereich derart abgestimmt wird, dass aufgrund einer Abschwächung des Pegels, hervorgerufen durch eine Leitungsdämpfung entlang der Leiter und der Koppelelemente, der Pegel in einer Empfangseinrichtung des ortsveränderlichen Anlagenteils, welcher sich außerhalb des Empfangsbereiches befindet, nicht mehr als gültiges Signal erkannt wird.

Dabei wird vorzugsweise zwischen dem ersten Schleifleitungssegment und dem zweiten Schleifleitungssegment ein erster Überlappungsbereich erzeugt, in welchem ein von einer ersten Datenübertragungseinrichtung ausgesendeter erster Pegel und ein von einer zweiten Datenübertragungseinrichtung ausgesendeter zweiter Pegel in einer Empfangseinrichtung des ortsveränderlichen Anlagenteils als jeweils ein gültiges Signal erkannt werden.

Vorzugsweise wird zur Unterscheidung des jeweils gültigen Signales jeder Datenübertragungseinrichtung ein Kommunikationskanal zugeordnet.

Hierzu kann zum einen jeder Datenübertragungseinrichtung eine eindeutige Segmentnummer zur logischen Trennung der Datenübertragung zugeordnet werden oder zum anderen wird jeder Datenübertragungseinrichtung ein eindeutiges Frequenzband zur Datenübertragung zugeordnet.

Weiterhin vorzugsweise wird das Verfahren derart durchgeführt, dass, wenn zumindest ein ortsveränderlicher Anlagenteil über Schleifkontakte an den ersten und zweiten Leiter angeschlossen wird, die Empfangseinrichtung derart betrieben wird, dass innerhalb des Überlappungsbereiches ein erstes Modem und ein zweites Modem derart betrieben werden, dass zunächst eine erste Kommunikationsverbindung zu einer Datenübertragungseinrichtung aufrechterhalten wird und eine zweite Kommunikationsverbindung zu einer anderen Datenübertragungseinrichtung aufgebaut wird und nach der aufgebauten, bestehenden zweiten Kommunikationsverbindung wird die erste Kommunikationsverbindung abgebaut.

Das Verfahren zur Durchführung einer Kommunikation zwischen ortsfesten Anlagenteilen und ortsveränderlichen Anlagenteilen wird vorzugsweise mit Datenübertragungseinrichtungen und zumindest einer Empfangseinrichtung betrieben, welche nach der Ethernet-Technologie betrieben werden.

Die Zeichnung zeigt zur näheren Erläuterung der Erfindung ein Ausführungsbeispiel. Es zeigt die
- FIG 1: einen Ausschnitt aus einem sich längs erstreckenden Schleifleitungsnetzwerk, die
- FIG 2: das Schleifleitungsnetzwerk in einer geschlossenen ovalen Ausführung mit vier Schleifleitungssegmenten und die
- FIG 3: einen Pegelverlauf eines Sendesignals einer Datenübertragungseinrichtung.

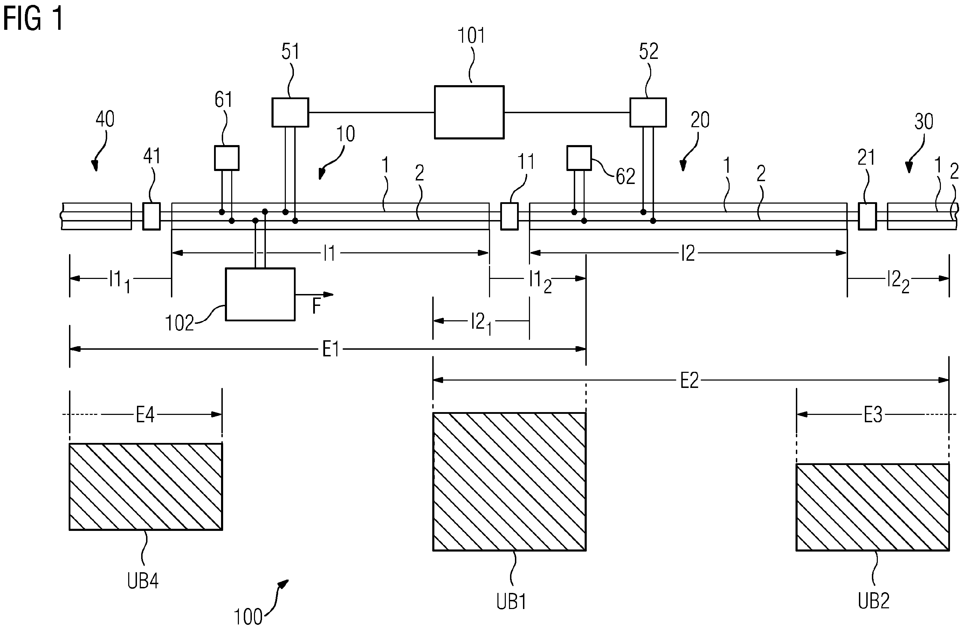

Gemäß der FIG 1 ist ein Ausschnitt eines Schleifleitungsnetzwerkes 100 für die Kommunikation von ortsfesten Anlagenteilen 101 mit ortsveränderlichen Anlagenteilen 102 dargestellt. Der ortsveränderliche Anlagenteil 102 ist beispielsweise als ein Transportfahrzeug ausgestaltet, welches über Schleifleiter mit einem ersten Leiter 1 und einem zweiten Leiter 2 eines ersten Schleifleitungssegmentes 10 verbunden ist und sich in Fahrtrichtung F fortbewegt.

Für den Transport eines Transportfahrzeuges durch mehrere Segmente steht das erste Schleifleitungsnetzwerk 10, ein zweites Schleifleitungsnetzwerk 20, ein drittes Schleifleitungsnetzwerk 30 und ein viertes Schleifleitungsnetzwerk 40 zur Verfügung, wobei jedes Segment einen ersten Leiter 1 und einen zweiten Leiter 2 aufweist, auf welchen Kommunikationsdaten und eine Versorgungsspannung für die ortsveränderlichen Anlagenteile 102 übertragbar sind.

An das erste Schleifleitungssegment 10 ist an dem ersten Leiter 1 und an dem zweiten Leiter 2 zur Bereitstellung der Versorgungsspannung eine erste Spannungsquelle 61 angeschlossen, an dem ersten Leiter 1 und dem zweiten Leiter 2 des zweiten Schleifleitungssegmentes 20 ist zur Bereitstellung der Versorgungsspannung für das zweite Schleifleitungssegment 20 eine zweite Spannungsquelle 62 angeschlossen. Für die Datenübertragung ist an das erste Schleifleitungssegment 10 eine erste Datenübertragungseinrichtung 51 an jeweils den ersten Leiter 1 und den zweiten Leiter 2 angeschlossen. Ebenso ist an das zweite Schleifleitungssegment 20 eine zweite Datenübertragungseinrichtung 52 an den ersten Leiter 1 und den zweiten Leiter 2 des zweiten Schleifleitungssegmentes 20 angeschlossen. Die erste Datenübertragungseinrichtung 51 und die zweite Datenübertragungseinrichtung 52 stehen mit dem ortsfesten Anlagenteil 101 in Verbindung, welcher beispielsweise als ein Leitsystem oder ein Leitrechner ausgestaltet ist.

Das erste Schleifleitungssegment 10 ist über ein erstes Koppelelement 11 mit dem zweiten Schleifleitungssegment 20 verkoppelt, für den Übergang von dem zweiten Schleifleitungssegment 20 auf das dritte Schleifleitungssegment 30 ist das zweite Schleifleitungssegment 20 über ein zweites Koppelelement 21 mit dem dritten Schleifleitungssegment 30 verkoppelt, für einen Übergang von dem ersten Schleifleitungssegment 10 auf das vierte Schleifleitungssegment 40 sind die beiden über ein viertes Koppelelement 41 verkoppelt.

Der ersten Datenübertragungseinrichtung 51 ist ein erster Empfangsbereich E1 zugeordnet, wobei der erste Empfangsbereich E1 auf eine Strecke abgebildet ist, welche sich aus einer ersten Segmentlänge 11 des ersten Schleifleitungssegmentes 10 zuzüglich einer ersten Überlappungslänge l1₁ und einer zweiten Überlappungslänge l1₂ ergibt. Der erste Empfangsbereich E1 wird also im Wesentlichen auf die erste Segmentlänge 11 des ersten Schleifleitungssegmentes 10 abgebildet, wobei bewusst der erste Empfangsbereich E1 so ausgelegt ist, dass er mit der ersten Überlappungslänge l1₁ in das vierte Schleifleitungssegment 40 und mit einer zweiten Überlappungslänge l1₂, ausgehend von dem ersten Schleifleitungssegment 10, in das zweite Schleifleitungssegment 20 hineinragt.

Die erste Datenübertragungseinrichtung 51 ist dabei derart ausgestaltet, dass ein von ihr ausgesendeter Pegel eines Datensignals auf den ersten Empfangsbereich E1 derart abgestimmt ist, dass aufgrund einer Abschwächung des Pegels, hervorgerufen durch eine Leitungsdämpfung entlang der Leiter 1,2 und des vierten Koppelelementes 41 bzw. des ersten Koppelelementes 11, der Pegel in einer Empfangseinrichtung 56 des ortsveränderlichen Anlagenteils 102, welcher sich außerhalb des ersten Empfangsbereiches E1 befindet, nicht mehr als gültiges Signal auswertbar ist. Oder, bezogen auf ein auswertbares gültiges Signal ist der von der ersten Datenübertragungseinrichtung 51 ausgesendeter Pegel nicht nur auf dem ersten Leiter 1 und dem zweiten Leiter 2 über die erste Segmentlänge 11 hinweg empfangbar, sondern auch in dem Bereich der ersten Überlappungslänge l1₁, welche in das vierte Schleifleitungssegment 40 hineinreicht bzw. auch in dem Bereich der zweiten Überlappungslänge l1₂, welche in das zweite Schleifleitungssegment 20 hineinreicht, noch auswertbar.

Demnach ergibt sich zwischen dem ersten Schleifleitungssegment 10 und dem zweiten Schleifleitungssegment 20 ein erster Überlappungsbereich UB1, in welchem ein von der ersten Datenübertragungseinrichtung 51 ausgesendeter erster Pegel und ein von der zweiten Datenübertragungseinrichtung 52 ausgesendeter zweiter Pegel in der Empfangseinrichtung 56 des ortsveränderlichen Anlagenteils 102 als jeweils ein gültiges Signal auswertbar ist.

Hierbei ist zu beachten, dass dem zweiten Schleifleitungssegment 20 ein zweiter Empfangsbereich E2 zugeordnet ist, welcher sich aus der zweiten Segmentlänge 12 zuzüglich einer zugehörigen ersten Überlappungslänge l2₁ und einer zweiten zugehörigen Überlappungslänge l2₂ ergibt.

Zwischen dem zweiten Schleifleitungssegment 20 und dem dritten Schleifleitungssegment 30 ist ein zweiter Überlappungsbereich UB2 ausgebildet, welcher sich durch die Überlappung des zweiten Empfangsbereiches E2 und eines dritten Empfangsbereiches E3, welcher zu dem dritten Schleifleitungssegment 30 gehört, ergibt. Analog dazu ergibt sich an der Segmentgrenze zwischen dem vierten Schleifleitungssegment 40 und dem ersten Schleifleitungssegment 10 ein vierter Überlappungsbereich UB4, welcher sich durch die Überlappung eines vierten Empfangsbereiches E4 mit dem ersten Empfangsbereich E1 ergibt.

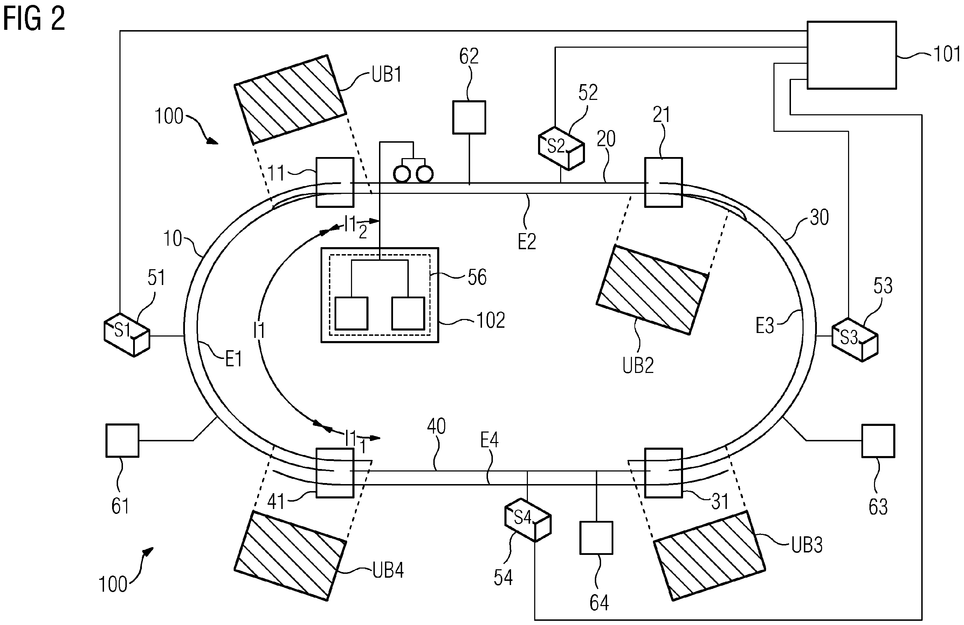

Der ortsveränderliche Anlagenteil 102 und die darin enthaltene Empfangseinrichtung 56 (siehe FIG 2) sind derart ausgestaltet, dass er, wenn er sich in dem ersten Überlappungsbereich UB1 befindet, eine erste Kommunikationsverbindung zu der ersten Datenübertragungseinrichtung 51 noch aufrecht erhält und eine zweite Kommunikationsverbindung zu der zweiten Datenübertragungseinrichtung 52 aufzubauen versucht, wobei nach dem erfolgreichen Aufbauen der zweiten Kommunikationsverbindung und einem Fortbestehen der zweiten Kommunikationsverbindung die erste Kommunikationsverbindung abgebaut wird.

Der Auf- und Abbau der Kommunikationsverbindung zu den unterschiedlichen Datenübertragungseinrichtungen in den verschiedenen Übertragungsbereichen ist analog zu sehen.

Die FIG 2 zeigt eine andere Darstellung des Schleifleitungsnetzwerkes 100 mit seinen vier Schleifleitungssegmenten 10, 20,30,40. Die vier Schleifleitungssegmente 10,20,30,40 sind zu einem Oval zusammengeschaltet. An den Segmentgrenzen der Schleifleitungssegmente sind zum Verkoppeln der Schleifleitungssegmente jeweils das erste Koppelelement 11, das zweite Koppelelement 21, das dritte Koppelelement 31 und das vierte Koppelelement 41 zwischen den Schleifleitungssegmenten geschaltet.

Den Datenübertragungseinrichtungen 51,52,53,54 ist jeweils eine eindeutige Segmentnummer S1,S2,S3,S4 zur logischen Trennung der Datenübertragungen zugeordnet.

Die Einspeisung von Datensignalen über die Datenübertragungseinrichtungen erfolgt gemäß FIG 2 an mehreren Stellen in der Transportanlage, nämlich ungefähr in der Mitte des ersten Schleifleitungssegmentes 10 mit der ersten Übertragungseinrichtung 51, ungefähr in der Mitte des zweiten Schleifleitungssegmentes 20 mit der zweiten Datenübertragungseinrichtung 52, ungefähr in der Mitte des dritten Schleifleitungssegmentes 30 mit der dritten Datenübertragungseinrichtung 53 und ungefähr in der Mitte des vierten Schleifleitungssegmentes 40 mit der vierten Datenübertragungseinrichtung 54. Hierdurch ergibt sich für jede Datenübertragungseinrichtung bzw. für jede Einspeisestelle von Daten ein Empfangsbereich E1, E2, E3,E4, innerhalb dessen die Kommunikation mit dem ortsveränderlichen Anlagenteil 102 möglich ist. Da sich die Empfangsbereiche E1, E2, E3, E4 an ihren Grenzen überlappen, kann sich ein mobiler Teilnehmer beim Durchfahren der Anlage nacheinander in die einzelnen Empfangsbereiche E1,E2,E3,E4 einbuchen.

Bevorzugt wird jeder Datenübertragungseinrichtung ein Network-Management-Key (NMK) zugeordnet. Hiermit lässt sich eine Unterteilung des Schleifleitungsnetzwerkes 100 in unabhängige logische Netze erreichen. Die Datenübertragungseinrichtungen 51,52,53,54 repräsentieren hierbei die logischen Netze, welche jeweils einen unterschiedlichen Network-Management-Key verwenden.

Um ein deterministisches Übertragungsverhalten zu gewährleisten, ist es erforderlich, dass jedem mobilen Teilnehmer stets eine Datenübertragungseinrichtung fest zugeordnet ist. Um Kollisionen zwischen den Datenübertragungseinrichtungen zu vermeiden, ist es darüber hinaus erforderlich, das logische Netz jeder Datenübertragungseinrichtung von den anderen logischen Netzen der anderen Datenübertragungseinrichtungen derart zu trennen, dass diese unabhängig und gleichzeitig voneinander auf die Leiter des Schleifleitungssegmentes zur Datenübertragung zugreifen können.

Um die logischen Netze aufzubauen, kann nun beispielsweise der HPAV-Standard verwendet werden. Er sieht vor, dass zur Verschlüsselung des Datenverkehrs ein Schlüssel vergeben werden kann, der so genannte Network-Management-Key (NMK). Dadurch können nur Teilnehmer mit demselben NMK miteinander kommunizieren. Zusätzlich zu den NMK können sich Modems mittels einer Netzwerk-ID (NID) zu Netzwerken zusammenschließen.

Dadurch, dass das HPAV-Verfahren Frequenzen im Bereich von 2MHz bis 30 MHz verwendet, können die Datensignale über die Koppelelemente 11,21,31,41 in gewissen Grenzen von einem Schleifleitungssegment auf das andere Schleifleitungssegment übertragen werden. Demnach sind die oberen Frequenzen des verwendeten Frequenzbereiches in der Lage, auf benachbarte Schleifleitungssegmente, nämlich über die Koppelstellen hinweg, auf andere Leiter überzukoppeln. Durch diesen Mechanismus des Überkoppelns ist die Reichweite der ausgesendeten Signale also nicht direkt durch eine Segmentlänge 11 begrenzt.

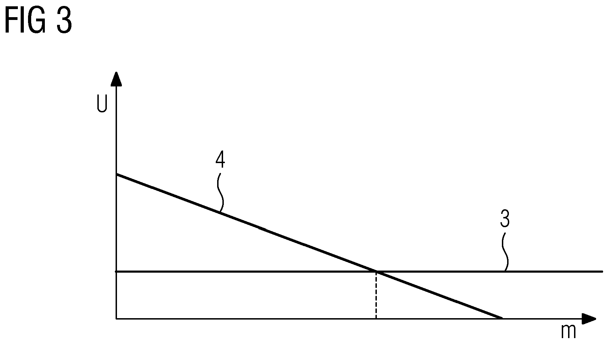

Mit der FIG 3 ist ein ausgesendeter Empfangspegel über eine Entfernung in Metern dargestellt. Ein Pegelverlauf 4 zeigt deutlich, dass der Pegel mit zunehmender Segmentlänge abnimmt. Eine maximale Länge eines Segmentes ist demnach dadurch gegeben, wenn der Pegelverlauf 4 eine Grenzwertlinie 3 für einen minimalen Pegel schneidet.

## Patentansprüche

1. Schleifleitungsnetzwerk (100) für die Kommunikation von ortsfesten Anlagenteilen (101) mit zumindest einem ortsveränderlichen Anlagenteil (102), aufweisend
- eine Mehrzahl an Schleifleitungssegmenten (10,20,30,40), wobei jedes Segment einen ersten Leiter (1) und einen zweiten Leiter (2) aufweist, auf welchen Kommunikationsdaten und eine Versorgungsspannung für die ortsveränderlichen Anlagenteile (102) übertragbar sind,
- eine Mehrzahl an Spannungsquellen (61,62,63,64), welche jeweils an den ersten und den zweiten Leiter (1,2) zur Bereitstellung der Versorgungsspannung angeschaltet sind,
- eine Mehrzahl an Datenübertragungseinrichtungen (51, 52, 53, - 54), welche ebenfalls an den ersten und den zweiten Leiter (1,2) zur Datenübertragung zwischen den ortsfesten Anlagenteilen (101) und den ortsveränderlichen Anlagenteilen (102) angeschaltet sind,
- eine Mehrzahl an Koppelelementen (11,12,13,14), wobei ein Koppelelement (11) ein erstes Schleifleitungssegment (10) an einer Übergangsstelle mit einem zweiten Schleifleitungssegment (20) verkoppelt, wobei die Koppelelemente (11, 12, - 13,14) derart ausgestaltet sind, dass zwischen den Schleifleitungssegmenten (10,20,30,40) zwar Daten übertragen werden können, aber die angeschaltete Versorgungsspannung geblockt wird,
**dadurch gekennzeichnet, dass**
jeder Datenübertragungseinrichtungen (51,52,53,54) ein Empfangsbereich (E1,E2,E3,E4) zugeordnet ist, wobei der Empfangsbereich (E1,E2,E3,E4) auf eine Strecke abgebildet ist, welche sich aus einer Länge (l1,l2,l3,l4) eines Schleifleitungssegmentes (10,20,30,40) zuzüglich einer ersten Überlappungslänge (l1₁) und einer zweiten Überlappungslänge (l1₂) ergibt, dabei ist die an das jeweilige Schleifleitungssegment (10,20,30,40) angeschlossene Datenübertragungseinrichtung (51,52,53,54) derart ausgestaltet, dass ein von ihr ausgesendeter Pegel eines Datensignals auf den jeweiligen Empfangsbereich (E1,E2,E3,E4) derart abgestimmt ist, dass aufgrund einer Abschwächung des Pegels, hervorgerufen durch eine Leitungsdämpfung entlang der Leiter (1,2) und der Koppelelemente (11,12,13,14), der Pegel in einer Empfangseinrichtung (56) des ortsveränderlichen Anlagenteils (102), welcher sich außerhalb des Empfangsbereiches (E1,E2,E3,E4) befindet nicht mehr als gültiges Signal auswertbar ist.

2. Schleifleitungsnetzwerk (100) nach Anspruch 1, wobei zwischen dem ersten Schleifleitungssegment (10) und dem zweiten Schleifleitungssegment (20) ein erster Überlappungsbereich (UB1) ausgebildet ist, in welchem ein von einer ersten Datenübertragungseinrichtung (51) ausgesendeter erster Pegel und ein von einer zweiten Datenübertragungseinrichtung (52) ausgesendeter zweiter Pegel in der Empfangseinrichtung (56) des ortsveränderlichen Anlagenteils (102) als jeweils ein gültiges Signal auswertbar ist.

3. Schleifleitungsnetzwerk (100) nach Anspruch 1 oder 2, wobei jeder Datenübertragungseinrichtungen (51,52,53,54) ein Kommunikationskanal zugeordnet ist.

4. Schleifleitungsnetzwerk (100) nach Anspruch 3, wobei jeder Datenübertragungseinrichtungen (51,52,53,54) eine eindeutige Segmentnummer (S1,S2,S3,S4) zur logischen Trennung der Datenübertragung zugeordnet ist.

5. Schleifleitungsnetzwerk (100) nach Anspruch 3, wobei jeder Datenübertragungseinrichtungen (51,52,53,54) ein eindeutiges Frequenzband zur Datenübertragung zugeordnet ist.

6. Schleifleitungsnetzwerk (100) nach einem der Ansprüche 1 bis 5, wobei der zumindest eine ortsveränderliche Anlagenteil (102) über Schleifkontakte an den ersten und zweiten Leiter (1,2) abgeschlossen ist und die Empfangseinrichtung (56) derart ausgestaltet ist, das ein erstes Modem (56a) und ein zweites Modem (56b) vorhanden ist, welche ausgestaltet sind eine erste Kommunikationsverbindung zu einer Datenübertragungseinrichtungen (51,52,53,54) aufrechtzuerhalten und eine zweite Kommunikationsverbindung zu einer anderen Datenübertragungseinrichtungen (51,52,53,54) aufzubauen und nach der aufgebauten, bestehenden zweiten Kommunikationsverbindung die erste Kommunikationsverbindung abzubauen.

7. Schleifleitungsnetzwerk (100) nach einem der Ansprüche 1 bis 6, ausgestaltet mit Datenübertragungseinrichtungen (51, 52,53,54) und zumindest einer Empfangseinrichtung (56), welche nach der Ethernet-Technologie arbeiten.

8. Verfahren zur Durchführung einer Kommunikation zwischen ortsfesten Anlagenteilen (101) und ortsveränderlichen Anlagenteilen (102), wobei
- eine Mehrzahl an Schleifleitungssegmenten (10,20,30,40) hintereinander angeordnet werden, wobei in jedem Schleifleitungssegment (10,20,30,40) über einen ersten Leiter (1) und einen zweiten Leiter (2) Kommunikationsdaten und eine Versorgungsspannung für den ortsveränderlichen Anlagenteil (102) übertragen werden, wobei
- Spannungsquellen (61,62,63,64) genutzt werden um in den jeweiligen ersten und den zweiten Leiter (1,2) die Versorgungsspannung einzuspeisen, wobei
- Datenübertragungseinrichtungen (51,52,53,54) genutzt werden, welche ebenfalls an den ersten und den zweiten Leiter (1,2) zur Datenübertragung zwischen dem ortsfesten Anlagenteil (101) und dem ortsveränderlichen Anlagenteil (102) angeschaltet werden,
wobei die Schleifleitungssegmente (10,20,30,40) über Koppelelemente (11,12,13,14) mit einander verkoppelt werden, wobei die Koppelelemente (11,12,13,14) zwar Daten übertragen, aber die angeschaltete Versorgungsspannung blocken,
**dadurch gekennzeichnet, dass**
jeder Datenübertragungseinrichtungen (51,52,53,54) ein Empfangsbereich (E1,E2,E3,E4) zugeordnet wird, wobei der Empfangsbereich (E1,E2,E3,E4) auf eine Strecke abgebildet wird, welche sich aus einer Länge (l1,l2,l3,l4) eines Schleifleitungssegmentes (10,20,30,40) zuzüglich einer ersten Überlappungslänge (l1₁) und einer zweiten Überlappungslänge (l1₂) ergibt, dabei wird die an das jeweilige Schleifleitungssegment (10,20,30,40) angeschlossene Datenübertragungseinrichtung (51,52,53,54) derart betrieben, dass ein von ihr ausgesendeter Pegel eines Datensignals auf den jeweiligen Empfangsbereich (E1,E2,E3,E4) derart abgestimmt wird, dass aufgrund einer Abschwächung des Pegels, hervorgerufen durch eine Leitungsdämpfung entlang der Leiter (1,2) und der Koppelelemente (11,12,13,14), der Pegel in einer Empfangseinrichtung (56) des ortsveränderlichen Anlagenteil (102), welcher sich außerhalb des Empfangsbereiches (E1,E2,E3,E4) befindet nicht mehr als gültiges Signal erkannt wird.

9. Verfahren nach Anspruch 8, wobei zwischen dem ersten Schleifleitungssegment (10) und dem zweiten Schleifleitungssegment (20) ein erster Überlappungsbereich (UB1) erzeugt wird, in welchem ein von einer ersten Datenübertragungseinrichtung (51) ausgesendeter erster Pegel und ein von einer zweiten Datenübertragungseinrichtung (52) ausgesendeter zweiter Pegel in der Empfangseinrichtung (56) des ortsveränderlichen Anlagenteil (102) als jeweils ein gültiges Signal erkannt wird.

10. Verfahren nach Anspruch 8 oder 9, wobei jeder Datenübertragungseinrichtungen (51,52,53,54) ein Kommunikationskanal zugeordnet wird.

11. Verfahren nach Anspruch 10, wobei jeder Datenübertragungseinrichtungen (51,52,53,54) eine eindeutige Segmentnummer (S1,S2,S3,S4) zur logischen Trennung der Datenübertragung zugeordnet wird.

12. Verfahren nach Anspruch 10, wobei jeder Datenübertragungseinrichtungen (51,52,53,54) ein eindeutiges Frequenzband zur Datenübertragung zugeordnet wird.

13. Verfahren nach einem der Ansprüche 8 bis 12, wobei zumindest einer der ortsveränderlichen Anlagenteile (102) über Schleifkontakte an den ersten und zweiten Leiter (1,2) angeschlossen wird und die Empfangseinrichtung (56) derart betrieben wird ist, dass innerhalb des Überlappungsbereiches (UB1) ein erstes Modem (56a) und ein zweites Modem 56b) derart betrieben werden, dass zunächst eine erste Kommunikationsverbindung zu einer Datenübertragungseinrichtungen (51,52,53,54) aufrechterhalten wird und eine zweite Kommunikationsverbindung zu einer anderen Datenübertragungseinrichtungen (51,52,53,54) aufgebaut wird und nach der aufgebauten, bestehenden zweiten Kommunikationsverbindung die erste Kommunikationsverbindung abgebaut wird.

14. Verfahren nach einem der Ansprüche 8 bis 13, wobei die Datenübertragungseinrichtungen (51,52,53,54) und zumindest eine Empfangseinrichtung (56) nach der Ethernet-Technologie betrieben werden.

## Claims

1. Collector wire network (100) for the communication of locally fixed system parts (101) with at least one variable-location system part (102), having
- a plurality of collector wire segments (10, 20, 30, 40), wherein each segment has a first conductor (1) and a second conductor (2), on which communication data and a supply voltage can be transmitted for the variable-location system parts (102),
- a plurality of voltage sources (61, 62, 63, 64), which are connected in each case to the first and the second conductor (1, 2) in order to provide the supply voltage,
- a plurality of data transmission devices (51, 52, 53, 54), which are likewise connected to the first and the second conductor (1, 2) for data transmission between the locally fixed system parts (101) and the variable-location system parts (102),
- a plurality of coupling elements (11, 12, 13, 14), wherein one coupling element (11) couples a first collector wire segment (10) at a transition point with a second collector wire segment (20), wherein the coupling elements (11, 12, 13, 14) are embodied such that data can be transmitted between the collector wire segments (10, 20, 30, 40), but the connected supply voltage is blocked,
**characterised in that**
each data transmission device (51, 52, 53, 54) is assigned a reception range (E1, E2, E3, E4), wherein the reception range (E1, E2, E3, E4) is mapped onto a section, which results from a length (11, 12, 13, 14) of a collector wire segment (10, 20, 30, 40) plus a first overlap length (11₁) and a second overlap length (11₂), wherein the data transmission device (51, 52, 53, 54) connected to the respective collector wire segment (10, 20, 30, 40) is embodied in such a way that a level of a data signal transmitted thereby is matched to the respective reception range (E1, E2, E3, E4), in such a way that, because of attenuation of the level, caused by line damping along the conductors (1, 2) and the coupling elements (11, 12, 13, 14), the level in a receiving device (56) of the variable-location system part (102) which is located outside the reception range (E1, E2, E3, E4) can no longer be evaluated as a valid signal.

2. Collector wire network (100) according to claim 1, wherein a first overlap area (UB1) is embodied between the first collector wire segment (10) and the second collector wire segment (20), in which a first level transmitted by a first data transmission device (51) and a second level transmitted by a second data transmission device (52) can be evaluated in the receiving device (56) of the variable-location system part (102) as a valid signal in each case.

3. Collector wire network (100) according to claim 1 or 2, wherein each data transmission device (51, 52, 53, 54) is assigned a communication channel.

4. Collector wire network (100) according to claim 3, wherein each data transmission device (51, 52, 53, 54) is assigned a unique segment number (S1, S2, S3, S4) for the logical separation of the data transmission.

5. Collector wire network (100) according to claim 3, wherein each data transmission device (51, 52, 53, 54) is assigned a unique frequency band for data transmission.

6. Collector wire network (100) according to one of claims 1 to 5, wherein the at least one variable-location system part (102) is connected to the first and second conductor (1, 2) by way of sliding contacts and the receiving device (56) is embodied such that a first modem (56a) and a second modem (56b) are present, which are embodied to maintain a first communication link to a data transmission device (51, 52, 53, 54) and to establish a second communication link to another data transmission device (51, 52, 53, 54) and after the second communication link is established and available, to terminate the first communication link.

7. Conductor loop network (100) according to one of claims 1 to 6, embodied with data transmission devices (51, 52, 53, 54) and at least one receiving device (56) which operate according to Ethernet technology.

8. Method for implementing a communication between locally fixed system parts (101) and variable-location system parts (102), wherein
- a plurality of collector loop segments (10, 20, 30, 40) are arranged one behind the other, wherein communication data and a supply voltage for the variable-location system part (102) are transmitted in each collector wire segment (10, 20, 30, 40) by way of a first conductor (1) and a second conductor (2), wherein
- voltage sources (61, 62, 63, 64) are used to feed the supply voltage into the respective first and second conductors (1, 2), wherein
- data transmission devices (51, 52, 53, 54) are used, which are likewise connected to the first and the second conductor (1, 2) for data transmission between the locally fixed system part (101) and the variable-location system part (102),
wherein the collector loop segments (10, 20, 30, 40) are coupled to one another by way of coupling elements (11, 12, 13, 14), wherein the coupling elements (11, 12, 13, 14) transmit data, but block the connected supply voltage,
**characterised in that**
each data transmission device (51, 52, 53, 54) is assigned a reception range (E1, E2, E3, E4), wherein the reception range (E1, E2, E3, E4) is mapped onto a section which results from a length (11, 12, 13, 14) of a collector wire segment (10, 20, 30, 40) plus a first overlap length (11₁) and a second overlap length (11₂), wherein the data transmission device (51, 52, 53, 54) connected to the respective collector wire segment (10, 20, 30, 40) is operated in such a way that a level of a data signal transmitted thereby is matched to the respective reception range (E1, E2, E3, E4) in such a way that, because of attenuation of the level, caused by line damping along the conductors (1, 2) and the coupling elements (11, 12, 13, 14), the level in a receiving device (56) of the variable-location system part (102) which is located outside the reception range (E1, E2, E3, E4) is no longer recognized as a valid signal.

9. Method according to claim 8, wherein a first overlap area (UB1) is generated between the first collector wire segment (10) and the second collector wire segment (20), in which overlap area (UB1) a first level transmitted by a first data transmission device (51) and a second level transmitted by a second data transmission device (52) are recognized in the receiving device (56) of the variable-location system part (102) as a valid signal in each case.

10. Method according to claim 8 or 9, wherein each data transmission device (51, 52, 53, 54) is assigned a communication channel.

11. Method according to claim 10, wherein each data transmission device (51, 52, 53, 54) is assigned a unique segment number (S1, S2, S3, S4) for the logical separation of the data transmission.

12. Method according to claim 10, wherein each data transmission device (51, 52, 53, 54) is assigned a unique frequency band for data transmission.

13. Method according to one of claims 8 to 12, wherein at least one of the variable-location system parts (102) is connected to the first and second conductor (1, 2) by way of sliding contacts and the receiving device (56) is operated such that a first modem (56a) and a second modem (56b) are operated within the overlap area (UB1) such that a first communication link to a data transmission device (51, 52, 53, 54) is firstly maintained and a second communication link to another data transmission device (51, 52, 53, 54) is established and after the second communication link is established and available, the first communication link is terminated.

14. Method according to one of claims 8 to 13, wherein the data transmission devices (51, 52, 53, 54) and at least one receiving device (56) are operated according to Ethernet technology.

## Revendications

1. Réseau (100) de lignes de contact pour faire communiquer des parties (101) d'installation, dont l'emplacement est fixe, avec au moins une partie (102) d'installation, dont l'emplacement peut se modifier, comportant
- une pluralité de segments (10, 20, 30, 40) de lignes de contact, chaque segment ayant un premier conducteur (1) et un deuxième conducteur (2), sur lesquels des données de communication et une tension d'alimentation des parties (102) d'installation, dont l'emplacement peut se modifier, peuvent être transmises,
- une pluralité de sources (61, 62, 63, 64) de tension, qui sont connectées respectivement aux premiers et aux deuxièmes conducteurs (1, 2) pour mettre à disposition la tension d'alimentation,
- une pluralité de dispositifs (51, 52, 53, 54) de transfert de données, qui sont connectés également aux premiers et aux deuxièmes conducteurs (1, 2) pour transmettre des données entre les parties (101) d'installation, dont l'emplacement est fixe, et les parties (102) d'installation, dont l'emplacement peut se modifier,
- une pluralité d'éléments (11, 12, 13, 14) de couplage, un élément (11) de couplage couplant un premier segment (10) de lignes de contact à un deuxième segment (20) de lignes de contact en un point de transition, les éléments (11, 12, 13, 14) de couplage étant conformés de manière à pouvoir transmettre entre les segments (10, 20, 30, 40) de lignes de contact certes des données, mais à empêcher l'application de la tension d'alimentation,
**caractérisé en ce que**
une région (E1, E2, E3, E4) de réception est affectée à chaque dispositif (51, 52, 53, 54) de transmission de données, la région (E1, E2, E3, E4) de réception étant formée sur une section, qui se compose d'une longueur (l1, l2, l3, l4) d'un segment (10, 20, 30, 40) de lignes de contact additionnée d'une première longueur (l1₁) de chevauchement et d'une deuxième longueur (l1₂) de chevauchement, le dispositif (51, 52, 53, 54) de transmission de données raccordé au segment (10, 20, 30, 40) de lignes de contact étant conformé de manière à ce qu'un niveau qu'il émet d'un signal de données soit adapté à la région (E1, E2, E3, E4) de réception de façon à ce que, en raison d'un abaissement du niveau provoqué par un affaiblissement de ligne le long du conducteur (1, 2) et des éléments (11, 12, 13, 14) de couplage, le niveau dans un dispositif (56) de réception de la partie (102) d'installation, dont l'emplacement peut se modifier et qui se trouve en-dehors de la région (E1, E2, E3, E4) de réception, ne puisse plus être évalué comme étant un signal valable.

2. Réseau (100) de lignes de contact suivant la revendication 1, dans lequel il est constitué, entre le premier segment (10) de lignes de contact et le deuxième segment (20) de lignes de contact, une première région (UB1) de chevauchement, dans laquelle un premier niveau émis par un premier dispositif (51) de transmission de données et un deuxième niveau émis par un deuxième dispositif (52) de transmission de données puissent, dans le dispositif (56) de réception de la partie (102) d'installation, dont l'emplacement peut se modifier, être évalués comme un signal valable.

3. Réseau (100) de lignes de contact suivant la revendication 1 ou 2, dans lequel un canal de communication est affecté à chaque dispositif (51, 52, 53, 54) de transmission de données.

4. Réseau (100) de lignes de contact suivant la revendication 3, dans lequel un numéro (S1, S2, S3, S4) de segment univoque est, pour la séparation logique de la transmission de données, affecté à chaque dispositif (51, 52, 53, 54) de transmission de données.

5. Réseau (100) de lignes de contact suivant la revendication 3, dans lequel une bande de fréquence univoque est, pour la transmission de données, affectée à chaque dispositif (51, 52, 53, 54) de transmission de données.

6. Réseau (100) de lignes de contact suivant l'une des revendications 1 à 5, dans lequel la au moins une partie (102) d'installation, dont l'emplacement peut se modifier, est terminée par des contacts glissant sur le premier et le deuxième conducteurs (1, 2) et le dispositif (56) de réception est conformé de manière à ce qu'il y ait un premier modem (56a) et un deuxième modem (56b), qui sont conformés pour maintenir une première liaison de communication vers un dispositif (51, 52, 53, 54) de transmission de données et pour établir une deuxième liaison de communication avec un autre dispositif (51, 52, 53, 54) de transmission de données et pour supprimer la première liaison de communication après que la deuxième liaison de communication existante a été établie.

7. Réseau (100) de lignes de contact suivant l'une des revendications 1 à 6, conformé en ayant des dispositifs (51, 52, 53, 54) de transmission de données et au moins un dispositif (56) de réception, qui fonctionne suivant la technologie ethernet.

8. Procédé pour effectuer une communication entre des parties (101) d'installation, dont l'emplacement est fixe, et des parties (102) d'installation, dont l'emplacement peut se modifier, dans lequel
- on dispose les uns derrière les autres une pluralité de segments (10, 20, 30, 40) de lignes de contact, dans lequel on transmet, dans chaque segment (10, 20, 30, 40) de lignes de contact par un premier conducteur (1) et par un deuxième conducteur (2), des données de communication et une tension d'alimentation de la partie (102) d'installation, dont l'emplacement peut se modifier, dans lequel
- on utilise des sources (61, 62, 63, 64) de tension pour appliquer la tension d'alimentation dans les premiers et deuxièmes conducteurs (1, 2), dans lequel
- on utilise des dispositifs (51, 52, 53, 54) de transmission de données, qui sont connectés également aux premiers et aux deuxièmes conducteurs (1, 2) pour transmettre des données entre la partie (101) d'installation, dont l'emplacement est fixe, et la partie (102) d'installation, dont l'emplacement peut se modifier,
dans lequel on couple les uns aux autres les segments (10, 20, 30, 40) de lignes de contact par des éléments (11, 12, 13, 14) de couplage, les éléments (11, 12, 13, 14) de couplage transmettant certes des données, mais empêchant l'application de la tension d'alimentation,
**caractérisé en ce que**
on affecte une région (E1, E2, E3, E4) de réception à chaque dispositif (51, 52, 53, 54) de transmission de données, on forme la région (E1, e2, E3, E4) de réception sur une section, qui se compose d'une longueur (l1, l2, l3, l4) d'un segment (10, 20, 30, 40) de lignes de contact additionnée d'une première longueur (l1₁) de chevauchement et d'une deuxième longueur (l1₂) de chevauchement, on fait fonctionner le dispositif (51, 52, 53, 54) de transmission de données raccordé au segment (10, 20, 30, 40) de lignes de contact, de manière à ce qu'un niveau, qu'il a émis d'un signal de données, soit accordé à la région (E1, E2, E3, E4) de réception, de façon que, en raison d'un abaissement du niveau provoqué par un affaiblissement de ligne le long des conducteurs (1, 2) et des éléments (11, 12, 13, 14) de couplage, le niveau dans un dispositif (56) de réception de la partie (102) d'installation, dont l'emplacement peut se modifier et qui se trouve en-dehors de la région (E1, E2, E3, E4) de réception, ne soit plus détecté comme un signal d'alarme.

9. Procédé suivant la revendication 8, dans lequel on produit, entre le premier segment (10) de lignes de contact et le deuxième segment (20) de lignes de contact, une première région (UB1) de chevauchement, dans laquelle un premier niveau émis par un premier dispositif (51) de transmission de données et un deuxième niveau émis par un deuxième dispositif (52) de transmission de données dans le dispositif (56) de réception de la partie (102) d'installation, dont l'emplacement peut se modifier, soient détectés comme un signal valable.

10. Procédé suivant la revendication 8 ou 9, dans lequel on affecte un canal de communication à chaque dispositif (51, 52, 53, 54) de transmission de données.

11. Procédé suivant la revendication 10, dans lequel on affecte, pour la séparation logique de la transmission de données, un numéro (S1, S2, S3, S4) de segment univoque à chaque dispositif (51, 52, 53, 54) de transmission de données.

12. Procédé suivant la revendication 10, dans lequel on affecte, pour la transmission de données, une bande de fréquence univoque à chaque dispositif (51, 52, 53, 54) de transmission de données.

13. Procédé suivant l'une des revendications 8 à 12, dans lequel on raccorde au moins l'une des parties (102) d'installation, dont l'emplacement peut se modifier, aux premiers et aux deuxièmes conducteurs (1, 2) par des contacts glissants et on fait fonctionner le dispositif (56) de réception, de manière à faire fonctionner, dans la région (UB1) de réception, un premier modem (56a) et un deuxième modem (56b), de façon à maintenir d'abord une première liaison de communication avec un dispositif (51, 52, 53, 54) de transmission de données et à établir une deuxième liaison de communication avec un autre dispositif (51, 52, 53, 54) de transmission de données et à faire cesser la première liaison de communication, après que la deuxième liaison de communication existante a été établie.

14. Procédé suivant l'une des revendications 8 à 13, dans lequel on fait fonctionner les dispositifs (51, 52, 53, 54) de transmission de donnée et au moins un dispositif (56) de réception suivant la technologie éthernet.
